# EUROPEAN PATENT SPECIFICATION

(11) **EP 3 523 344 B1**
(45) Date of publication and mention of the grant of the patent: **11.11.2020**
(21) Application number: 17772046.3
(22) Date of filing: 22.09.2017
(51) Int. Cl.: C08F 110/08, B33Y 70/00

(54) **USE OF A SHEET OR FILM COMPRISING 1-BUTENE COPOLYMER AS A PLATE IN 3D PRINTING**
VERWEDUNG EINER PLATTE ODER FILMS ENTHALTEND EIN 1-BUTEN COPOLYMER ALS UNTERLAGE FÜR DAS 3D-DRUCKEN
UTILISATION D'UNE FEUILLE OU D'UN FILM COMPRENANT UN COPOLYMÈRE 1-BUTÈNE COMME PLAQUE DANS L'IMPRESSION 3D

(30) Priority: 06.10.2016 EP 16192534
(43) Date of publication of application: 14.08.2019
(73) Proprietor: Basell Poliolefine Italia S.r.l., 20121 Milano (IT)
(72) Inventor: DE PALO, Roberto, 44122 Ferrara (IT); CAVALIERI, Claudio, 44122 Ferrara (IT)
(74) Representative: LyondellBasell
(86) International application number: PCT/EP2017/074121
(87) International publication number: WO 2018/065243

(56) References cited:
- EP-A1- 1 741 747
- EP-A1- 1 820 821
- US-A- 3 435 017

## Description

### FIELD OF THE INVENTION

The present disclosure relates to a base plate material comprising 1-butene based polymer.

### BACKGROUND OF THE INVENTION

An extrusion-based 3D printer is used to build a 3D model from a digital representation of the 3D model in a layer-by-layer manner by extruding a flowable modeling material. For example, a filament of the modeling material is extruded through an extrusion tip carried by an extrusion head, and is deposited as a sequence of roads on a substrate in an x-y plane. The melted material can also derive from a direct deposition from a screw extruder or similar, or sintered from powders (SLS) The extruded modeling material fuses to previously deposited modeling material, and solidifies upon a drop in temperature. For example, the position of the extrusion head relative to the substrate is then incremented along a z-axis (perpendicular to the x-y plane), and the process is then repeated to form a 3D model resembling the digital representation. Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In the printing process the plate plays an important role, in fact the plate has to hold the printing object un such a way that the latter does not move during the printing but allowing the object to be easily removed when the printing is terminated.

In the art various substance are used depending also to the material to be printed. For example ABS is printed with good results on a heated glass plated covered with vinylic glue.

However there is the need in the art for new materials to be used as plate especially for printing polyolefin based materials. EP 1 820 821 relates to a propylene based composition and the use thereof. However it is completley silent about the extrusion-based 3D printer.

### SUMMARY OF THE INVENTION

The applicant found that a plate comprising as a top layer a sheet or film comprising 1-butene based copolymer containing from 0 to 50 wt% of ethylene, propylene or alpha olefins of formula CH₂=CHR, wherein R is a C₃-C₂₀ alkyl radical preferably C₃-C₁₀ alkyl radical can be advantageously used as plate for extrusion-based 3D printing.

### BRIEF DESCRIPTION OF THE DRAWINGS

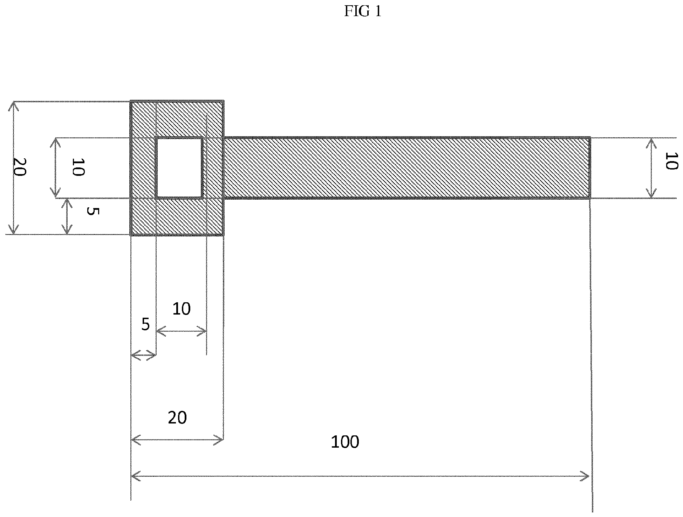

Figure 1 is the front view of the sample used in the print tests of the examples. The measure are given in mm, the sample once completely printed is 5 mm thick.

### DETAILED DESCRIPTION OF THE INVENTION

The applicant found that a plate for use in an extrusion-based additive manufacturing system comprising as a top layer a sheet or film comprising 1-butene based copolymer containing from 0 to 50 wt% of ethylene, propylene or alpha olefins of formula CH₂=CHR, wherein R is a C₃-C₁₀ alkyl radical preferably C₃-C₈ alkyl radical can be advantageously used as plate for extrusion-based 3D printing.

For the purpose of this disclosure the term sheet is referred to sheet having thickness higher than 0.5 mm. For the purpose of this disclosure the term film is referred to sheet having thickness lower than 0.5 mm.

The other layers of the plate can be made of various materials such as polystyrene polypropylene, metals such as aluminum and can be also an heating plate, or a mono or multilayer film. The top layer of said plate comprises at least 30 wt% preferably at least 50 wt% , more preferably at least 70 wt% even more preferably at least 85 wt%; still even more preferably more than 99 wt% of 1-butene based copolymer containing from 0 to 50 wt% of ethylene, propylene or alpha olefins of formula CH₂=CHR, wherein R is a C₃-C₁₀ alkyl radical preferably C₃-C₈ alkyl radical. The plate can also be made entirely of a sheet or film of 1-butene based copolymer object of the present disclosure in this case the top layer is the only layer of the plate.

The 1-butene based copolymers contains from 0 to 50 wt% of ethylene, propylene, 1-hexene or 1-octene as comonomers, more preferably the comonomers are ethylene and propylene. The comonomer contents preferably range from 2 to 20 wt%; more preferably from 4 to 10 wt%. More preferably the 1-butene based copolymer is 1-butene homopolymer.

The comonomer content is measured by using ¹³C-NMR.

The 1-butene based copolymers is isotactic, i.e. the mmmm pentads measured with C¹³NMR is higher than 50 mol%; preferably higher than 80 mol%.

The 1-butene based copolymers used in the present disclosure are commercial grades, such as PB-0110M, PB-03000M sold by lyondellbasell.

The Melt flow rate (MFR ISO 1133 (190°C, 2.16 Kg) of the 1-butene based copolymer of the present disclosure ranges preferably from 0.5 to 500.0 g/10 min; more preferably from 2.0 to 50.0 g/10 min.

When a plate object of the present disclosure is used in a 3D printing process it is possible to realize the right adhesion force so that the object to be printed is stable during the printing process but it can be removed easily when the printed process ended and cohesion jointing is avoided.

Since the adhesion of the object on the plate is achieved by using only the surface of the plate itself the 1-butene based copolymers object of the present disclosure can be used even only as a film to be put on the plate itself as top layer. The film can be mono or multilayer and can content an adhesive on one or both sides This gives the advantage that the film can be easily replaced.

The plate object of the present invention can be also heated during the printing process, even if often not necessary, to improve the adhesion.

The plate can be used with different filaments such as propylene-based filaments, nylon based filaments ABS and PLA based filaments.

The following examples are given to illustrate and not to limit the present invention.

### EXAMPLES

The data of the propylene polymer materials were obtained according to the following methods:
Melt flow rate (MFR)
The melt flow rate MFR of the polymer was determined according to ISO 1133 (230°C, 2.16 Kg or 190°C;/2,16 kg)
The following commercial polymers have been used for the plates
PB0300M polybutene homopolymer having an MFR of 4 g/10 min (190°C, 2.16 Kg) and a mmmm pentads higher than50 mol%
Adflex Q100F is an heterophasic propylene ethylene copolymer having an MFR of 0.6 g/10 min (230°C, 2.16 Kg) sold by Lyondellbasell

Plates have been obtained by injection moulding to produce a sheet having a thicknes of about 2 mm.

### Filaments

Polymers PP4 and PP5 have been extruted to form a filament having 1.75 mm of diameter.
PP4 is commercial grade ADSYL 5C30F sold by LyondellBasell
PP5 is commercial grade RP 210M sold by LyondellBasell
Commercial PLA filament has been further used

### Print test

The printer was a 3D Rostock delta printer. The printer conditions are the followings:

| | | |
|---|---|---|
| Filament diameter | mm | 1,75 ±0.03 |
| Nozzle diameter | mm | 0,4 |
| | | |
| Temperature first layer | °C | 245 |
| Temperature other layers | °C | 245 |
| | | 1 |
| Layer high | mm | 0,2 |
| Infill | | 100% |
| printer speed | mm/min | 3600 |
| Speed first layer | | 60% |
| Speed other layers | | 100% |
| Speed infill | mm/min | 4.000 |

The sample to be printed is reported in Fig 1. For each filament two printer tests have been carried out at 40°C and room temperature (i.e. no heating applied). At the end of the printing the adhesion of the plate has been verified The results are reported on table 1.

**Table 1**

| Plate | PP4 40°C | PP4 RT | PP5 40°C | PP5 RT | PLA RT |
|---|---|---|---|---|---|
| Q100F* | A2 | C3 | C1 | C3 | C0 |
| PB0300M | A3 | A3 | A3 | A3 | A3 |

| | | | | | |
|---|---|---|---|---|---|
| * comparative | | | | | |

RT room temperature
A= the joint is adhesive and can be removed
C= the joint is cohesive
0= no adeshion or coeshion
3= perfect adhesion or cohesion

Thus A value of A3 means that the adhesion is perfect and the object can be printed and removed. From table 1 clearly results that a plate based on 1-butene polymer (PB0300M) can be advantageously used giving perfect adhesion with various materials while the plates of the comparative examples does not gives adhesion or the adhesion is poor and the object cannot be printed

## Claims

1. The use of a sheet or film as top layer of a plate in an extrusion-based additive manufacturing system, said sheet of film comprising 1-butene based copolymer containing from from 0 to 50 wt% of ethylene, propylene, 1-hexene or 1-octene as comonomers.

2. The use of a sheet or film the according to claim 1 wherein in the 1-butene based copolymer the comonomer contents preferably range from 2 to 20 wt%.

3. The use of a sheet or film according to claims 1 or 2 wherein the 1-butene based copolymer is 1-butene homopolymer.

4. The use of a sheet or film according to anyone of claims 1-3 wherein the 1-butene based copolymers is isotactic having the mmmm pentads measured with C¹³NMR higher than 50 mol%.

5. The use of a sheet or film according to anyone of claims 1-4 wherein The Melt flow rate (MFR ISO 1133 (190°C, 2.16 Kg) of the 1-butene based copolymer ranges from 0.5 to 500.0 g/10 min.

6. The use of a sheet or film according to anyone of claims 1-5 wherein The Melt flow rate (MFR ISO 1133 (190°C, 2.16 Kg) of the 1-butene based copolymer ranges from 2.0 to 100.0 g/10 min.

7. The use of a sheet or film according to anyone of claims 1-6 wherein the top layer of the plate comprises at least 50 wt% 1-butene based copolymer

8. The use of a sheet or film according to anyone of claims 1-7 wherein the top layer of the plate comprises at least 70 wt% 1-butene based copolymer.

9. The use of a sheet or film according to anyone of claims 1-8 wherein the plate is made entirely of a sheet or film of the 1-butene based copolymer.

## Patentansprüche

1. Verwendung einer Platte oder eines Films als Deckschicht einer Unterlage in einem extrusionsbasierten additiven Fertigungssystem, wobei die Platte oder der Film auf 1-Buten basiertes Copolymer umfasst, das 0 bis 50 Gew.% Ethylen, Propylen, 1-Hexen oder 1-Octen als Comonomere enthält.

2. Verwendung einer Platte oder eines Films nach Anspruch 1, wobei der Comonomergehalt in dem auf 1-Buten basierenden Copolymer vorzugsweise im Bereich von 2 bis 20 Gew.% liegt.

3. Verwendung einer Platte oder eines Films nach den Ansprüchen 1 oder 2, wobei das auf 1-Buten basierende Copolymer 1-Butenhomopolymer ist.

4. Verwendung einer Platte oder eines Films nach einem der Ansprüche 1 bis 3, wobei das auf 1 -Buten basierende Copolymer isotaktisch ist, wobei die mmmm-Pentaden, gemessen mittels ¹³C-NMR, höher als 50 Mol.% sind.

5. Verwendung einer Platte oder eines Films nach einem der Ansprüche 1 bis 4, wobei die Schmelzflussrate (MFR ISO 1133 (190 °C, 2,16 Kg) des auf 1-Buten basierenden Copolymers im Bereich von 0,5 bis 500,0 g/10 min liegt.

6. Verwendung einer Platte oder eines Films nach einem der Ansprüche 1 bis 5, wobei die Schmelzflussrate (MFR ISO 1133 (190 °C, 2,16 Kg) des auf 1-Buten basierenden Copolymers im Bereich von 2,0 bis 100,0 g/10 min liegt.

7. Verwendung einer Platte oder eines Films nach einem der Ansprüche 1 bis 6, wobei die Deckschicht der Unterlage mindestens 50 Gew.% auf 1-Buten basierendes Copolymer umfasst.

8. Verwendung einer Platte oder eines Films nach einem der Ansprüche 1 bis 7, wobei die Deckschicht der Unterlage mindestens 70 Gew.% auf 1-Buten basierendes Copolymer umfasst.

9. Verwendung einer Platte oder eines Films nach einem der Ansprüche 1 bis 8, wobei die Unterlage vollständig aus einer Platte oder einem Film des auf 1-Buten basierenden Copolymers hergestellt ist.

## Revendications

1. Utilisation d'une feuille ou d'un film comme couche supérieure d'une plaque dans un système de fabrication additive basé sur l'extrusion, ladite feuille ou ledit film comprenant un copolymère à base de 1-butène contenant 0 à 50% en poids d'éthylène, de propylène, de 1-hexène ou de 1 -octène en tant que comonomères.

2. Utilisation d'une feuille ou d'un film selon la revendication 1, où, dans le copolymère à base de 1-butène, les teneurs en comonomère sont préférablement situées dans la plage de 2 à 20% en poids.

3. Utilisation d'une feuille ou d'un film selon les revendications 1 ou 2, le copolymère à base de 1-butène étant un homopolymère de 1-butène.

4. Utilisation d'une feuille ou d'un film selon l'une quelconque des revendications 1 à 3, les copolymères à base de 1-butène étant isotactiques présentant plus de 50% en mole de mmmm pentades, mesurés par C¹³RMN

5. Utilisation d'une feuille ou d'un film selon l'une quelconque des revendications 1 à 4, l'indice de fluidité à chaud (MFRISO 1133 (190°C, 2,16 kg) du copolymère à base de 1-butène étant situé dans la plage de 0,5 à 500,0 g/10 min.

6. Utilisation d'une feuille ou d'un film selon l'une quelconque des revendications 1 à 5, l'indice de fluidité à chaud (MFRISO 1133 (190°C, 2,16 kg) du copolymère à base de 1-butène étant situé dans la plage de 2,0 à 100,0 g/10 min.

7. Utilisation d'une feuille ou d'un film selon l'une quelconque des revendications 1 à 6, la couche supérieure de la plaque comprenant au moins 50% en poids de copolymère à base de 1-butène

8. Utilisation d'une feuille ou d'un film selon l'une quelconque des revendications 1 à 7, la couche supérieure de la plaque comprenant au moins 70% en poids de copolymère à base de 1-butène.

9. Utilisation d'une feuille ou d'un film selon l'une quelconque des revendications 1 à 8, la plaque étant entièrement constituée d'une feuille ou d'un film du copolymère à base de 1-butène.
